# EUROPÄISCHE PATENTSCHRIFT

(11) **EP 2 346 954 B1**
(45) Veröffentlichungstag und Bekanntmachung des Hinweises auf die Patenterteilung: **12.04.2017**
(21) Anmeldenummer: 09806071.8
(22) Anmeldetag: 19.11.2009
(51) Int. Cl.: C09D 11/00, C09D 11/10, B41M 3/14, C08G 64/06

(54) **ZUBEREITUNG ZUR HERSTELLUNG EINER DECKSCHICHT FÜR EIN ELEKTROLUMINESZIERENDES SICHERHEITSELEMENT EINES SICHERHEITS- UND/ODER WERTDOKUMENTES**
PREPARATION FOR PRODUCING A COVER LAYER FOR AN ELECTROLUMINESCENT SECURITY ELEMENT OF A SECURITY DOCUMENT AND/OR VALUE DOCUMENT
PRÉPARATION POUR LA FABRICATION D'UNE COUCHE DE COUVERTURE DESTINÉE À UN ÉLÉMENT DE SÉCURITÉ ÉLECTROLUMINESCENT D'UN DOCUMENT DE SÉCURITÉ ET/OU D'UN DOCUMENT DE VALEUR

(30) Priorität: 19.11.2008 DE 102008058260
(43) Veröffentlichungstag der Anmeldung: 27.07.2011
(73) Patentinhaber: Bundesdruckerei GmbH, 10958 Berlin (DE)
(72) Erfinder: MUTH, Oliver, 12277 Berlin (DE)
(74) Vertreter: Jungblut, Bernhard Jakob
(86) Internationale Anmeldenummer: PCT/DE2009/001631
(87) Internationale Veröffentlichungsnummer: WO 2010/057472

(56) Entgegenhaltungen:
- WO-A1-02/36579
- DE-A1- 4 421 561
- DE-A1- 19 832 570
- JP-A- 2004 315 765

## Beschreibung

Die Erfindung betrifft eine Verwendung einer Zubereitung enthaltend: A) 0,1 bis 40 Gew.-% eines organischen Polymers, B) 60 bis 99,9 Gew.-% eines Lösungsmittels, C) 0 bis 10 Gew.-%, bezogen auf Trockenmasse, eines Farbmittels oder Farbmittelgemischs, D) 0 bis 10 Gew.-% eines funktionalen Materials oder einer Mischung funktionaler Materialien, E) 0 bis 30 Gew.-% Additive und/oder Hilfsstoffe, oder einer Mischung solcher Stoffe, wobei die Summe der Komponenten A) bis E) stets 100 Gew.-% ergibt.

Die Erfindung betrifft des Weiteren ein Sicherheits- und/oder Wertdokument mit einer Deckschicht, hergestellt mit einer solchen Zubereitung und ein Verfahren zur Herstellung eines Sicherheits- und/oder Wertdokumentes unter Einsatz einer solchen Zubereitung.

### Hintergrund der Erfindung und Stand der Technik

Sicherheits- und/oder Wertdokumente können Sicherheitselemente aufweisen, welche elektrolumineszierende Substanzen enthalten. Solche Substanzen zeigen aber auch in der Regel Photolumineszenz. Daher können unbefugte Personen auf recht einfache Weise, beispielsweise durch Exposition des Sicherheits- und/oder Wertdokumentes einer Lichtquelle, insbesondere einer UV-Quelle, die Anwesenheit und Lage eines solchen Sicherheitselementes feststellen.

Zwar scheint die vorstehende Problematik dadurch zu lösen zu sein, dass Bereiche mit elektrolumineszierenden Substanzen mit einer im Sichtbaren meist transparenten, jedoch UV blockierenden Deckschicht abgedeckt werden. Jedoch zeigen Versuche mit fachüblichen
Siebdruckfirnissen, welche mit UV-Blockern versetzt wurden, selbst bei einer Beladung von 15 Gew.-% des UV-Blockers und/oder der Beimischung von Titandioxid keine hinreichende Abschattung des Sicherheitselementes im UV-Bereich. Folglich waren die Bereiche mit den elektrolumineszierenden Substanzen ohne weiteres erkennbar. Zudem ließ sich die Deckschicht leicht abkratzen und zeigte einen unerwünschten Gelbstich.

Aus der Literaturstelle EP 0 688 839 B1 sind Siebdruckfarben der eingangs genannten Zusammensetzung bekannt. Dieser Literaturstelle sind auch Verfahren zur Herstellung solcher Polycarbonate entnehmbar. Diese Literaturstelle wird hiermit vollumfänglich in den Offenbarungsgehalt der vorliegenden Anmeldung aufgenommen. Der Einsatz von UV-Blockern ist dagegen in dieser Literaturstelle nicht beschrieben. Analoges gilt für die Literaturstellen DE 44 24 106 A1 und DD 297 605 A5.

Das Dokument WO 2002/36579 A1 beschreibt einen UV-Blocker mit Triazin oder Pyramidin Gruppen. Die Dokumente DE 44 21 561 A1, DE 198 32 570 A1 und JP 2004 315765A beschreiben Zubereitungen enthaltend ein Polycarbonatderivat.

### Technisches Problem der Erfindung

Der Erfindung liegt daher das technische Problem zu Grunde, eine (Ab-) Deckschicht für ein eine elektrolumineszierende Substanz enthaltendes Substrat bereit zu stellen, welche diese Substanz im UV-Bereich soweit abschattet, dass Photolumineszenz der Substanz nicht ohne weiteres erkennbar ist, und zudem hohe Haftung und Freiheit von Farbstichen aufweist.

### Grundzüge der Erfindung und bevorzugte Ausführungsformen

Zur Lösung dieses technischen Problems lehrt die Erfindung den Gegenstand des Anspruchs 1.

Die Erfindung beruht auf der überraschenden Erkenntnis, dass die Kombination üblicher UV-Blocker speziell mit Beschichtungsmitteln bzw. Farben enthaltend erfindungsgemäß eingesetzte Polycarbonatderivate einerseits zu einer sehr guten Abschattung von Sicherheitselementen im UV-Bereich und andererseits zu einer sehr guten Haftung sowie optisch einwandfreier Erscheinung, insbesondere Freiheit von Farbstichen, der Deckschicht führt.

Als UV-Blocker sind alle Substanzen bezeichnet, welche bei Einsatz als Zusatz zu einem Beschichtungsmittel eine Erhöhung der Extinktion von zumindest 0,1, besser zumindest 0,3, vorzugsweise zumindest 1,0, im Wellenlängenbereich 330 bis 370 nm bei einer Schichtdicke des getrockneten Beschichtungsmittels von 5 µm bewirkt, verglichen mit der Extinktion gemessen bei gleichen Bedingungen, jedoch in Abwesenheit des UV-Blockers.

Als UV-Blocker können grundsätzlich beliebige, hierfür beispielsweise aus dem kosmetischen Bereich bekannte Substanzen eingesetzt werden. Vorzugsweise werden lipophile UV-Blocker eingesetzt. Der UV-Blocker kann insbesondere ausgewählt sein aus der Gruppe bestehend aus Butylmethoxydibenzoylmethane, Octyl Methoxycinnamate, Octyl Salicylate, Homosalate, Menthyl Antranilate, Octocrylene, Benzophenone-3, Octyl Dimethyl PABA, 4-Methylbenzilidene, und Mischungen von zwei oder mehr solcher Substanzen. Bei diesen Substanznamen handelt es sich INCI Bezeichnungen. Aber auch UV-Blocker, wie beispielsweise in der Literaturstelle DE 101 59 373 A1 beschrieben, sind einsetzbar.

Im Einzelnen kann das Polycarbonatderivat funktionelle Carbonatstruktureinheiten der Formel (I) enthalten, 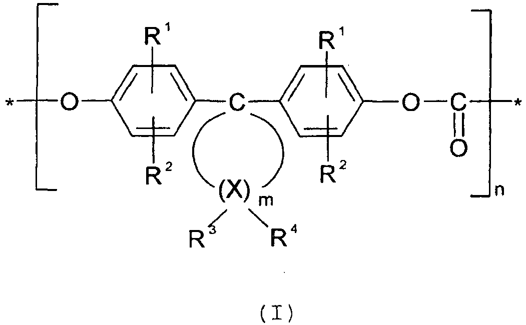 worin R¹ und R² unabhängig voneinander Wasserstoff, Halogen, bevorzugt Chlor oder Brom, C₁-C₅-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl; m eine ganze Zahl von 4 bis 7, bevorzugt 4 oder 5; R³ und R⁴ für jedes X individuell wählbar, unabhängig voneinander Wasserstoff oder C₁-C₆-Alkyl; X Kohlenstoff und n eine ganze Zahl größer 20 bedeuten, mit der Maßgabe, dass an mindestens einem Atom X, R³ und R⁴ gleichzeitig Alkyl bedeuten.

Bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in alpha-Stellung zu dem Diphenyl-substituierten C-Atom (C1) können nicht dialkylsubstituiert sein. Die X-Atome in beta-Stellung zu C1 können mit Alkyl disubstituiert sein. Bevorzugt ist m = 4 oder 5. Das Polycarbonatderivat kann beispielsweise auf Basis von Monmeren, wie 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol gebildet sein.

Ein erfindungsgemäß eingesetztes Polycarbonatderivat kann beispielsweise gemäß der Literaturstelle DE 38 32 396.6 aus Diphenolen der Formel (Ia) hergestellt werden, deren Offenbarungsgehalt hiermit vollumfänglich in den Offenbarungsgehalt dieser Beschreibung aufgenommen wird.

Es können sowohl ein Diphenol der Formel (Ia) unter Bildung von Homopolycarbonaten als auch mehrere Diphenole der Formel (Ia) unter Bildung von Copolycarbonaten verwendet werden (Bedeutung von Resten, Gruppen und Parametern, wie in Formel I).

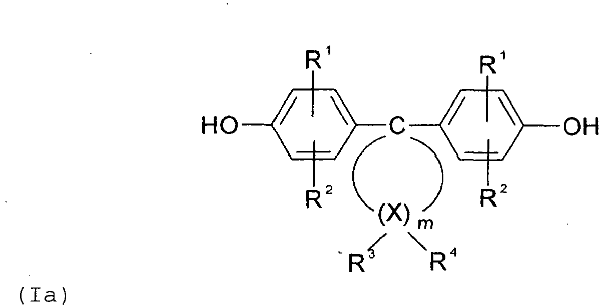

Außerdem können die Diphenole der Formel (Ia) auch im Gemisch mit anderen Diphenolen, beispielsweise mit denen der Formel (Ib)

HO - Z - OH (Ib),

zur Herstellung von hochmolekularen, thermoplastischen, aromatischen Polycarbonatderivaten verwendet werden.

Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Beispiele der Diphenole der Formel (Ib) sind: Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha, alpha '-Bis-(hydroxyphenyl)-diisopropylbenzole sowie deren kernalkylierte und kernhalogenierte Verbindungen.

Diese und weitere geeignete Diphenole sind z.B. in den Literaturstellen US-A 3 028 365, 2 999 835, 3 148 172, 3 275 601, 2 991 273, 3 271 367, 3 062 781, 2 970 131 und 2 999 846, in den Literaturstellen DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1964", beschrieben, welche hiermit vollumfänglich in den Offenbarungsgehalt der vorliegenden Anmeldung aufgenommen werden.

Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, alpha , alpha -Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, alpha , alpha -Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ib) sind beispielsweise: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ib), soll zwischen 100 Mol-% (Ia) zu 0 Mol-% (Ib) und 2 Mol-% (Ia) zu 98 Mol-% (Ib), vorzugsweise zwischen 100 Mol-% (Ia) zu 0 Mol-% (Ib) und 10 Mol-% (Ia) zu 90 Mol-% (Ib) und insbesondere zwischen 100 Mol-% (Ia) zu 0 Mol-% (Ib) und 30 Mol-% (Ia) zu 70 Mol-% (Ib) liegen.

Die hochmolekularen Polycarbonatderivate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die erfindungsgemäß eingesetzten Polycarbonatderivate können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind: Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Als Kettenabbrecher zur an sich bekannten Regelung des Molekulargewichts der Polycarbonatderivate dienen monofunktionelle Verbindungen in üblichen Konzentraten. Geeignete Verbindungen sind z.B. Phenol, tert.-Butylphenole oder andere Alkyl-substituierte Phenole. Zur Regelung des Molekulargewichts sind insbesondere kleine Mengen Phenole der Formel (Ic) geeignet 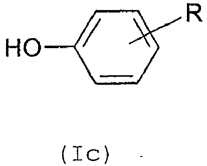 worin R einen verzweigten C₈- und/oder C₉-Alkylrest darstellt.

Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonatderivate können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden.

Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ib), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol sowie insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wässrige alkalische Phase dient beispielsweise NaOH-Lösung. Die Herstellung der Polycarbonatderivate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phösgenierung oder während oder auch nach der Phosgenierung zugesetzt werden.

Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonatderivate können linear oder verzweigt sein, sie sind Homopolycarbonate oder Copolycarbonate auf Basis der Diphenole der Formel (Ia).

Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonatderivaten enthalten.

Eine besonders vorteilhafte Ausführungsform der Erfindung ist dadurch gekennzeichnet, dass das Polycarbonatderivat ein Copolymer enthaltend, insbesondere bestehend aus, Monomereinheiten M1 auf Basis der Formel (Ib),vorzugsweise Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, ist, wobei das Molverhältnis M2/M1 vorzugsweise größer als 0,3, insbesondere größer als 0,4, beispielsweise größer als 0,5 ist. Denn bei solchen Copolymeren wurde überraschenderweise festgestellt, dass die Glastemperatur nach einem ersten Aufheizzyklus von Tg unter 150 °C bei einem zweiten Aufheizzyklus erhöht sein kann, was die Stabilität des erhaltenen Verbundes deutlich erhöhen kann.

Bevorzugt ist es, wenn das Polycarbonatderivat ein mittleres Molekulargewicht (Gewichtsmittel) von mindestens 10.000, vorzugsweise von 20.000 bis 300.000, aufweist.

Die Komponente B kann grundsätzlich im Wesentlichen organisch oder wäßrig sein. Im Wesentlichen wäßrig meint dabei, dass bis zu 20 Gew.-% der Komponente B) organische Lösungsmittel sein können. Im Wesentlichen organisch meint, dass bis zu 5 Gew.-% Wasser in der Komponente B) vorliegen können. Vorzugsweise enthält die Komponente B einen bzw. besteht aus einem flüssigen aliphatischen, cycloaliphatischen, und/oder aromatischen Kohlenwasserstoff, einem flüssigem organischen Ester, und/oder einer Mischung solcher Substanzen.

Die Komponente B) enthält bzw. besteht beispielsweise aus organischen Hydroxyfettsäuren und/oder Estern von Fettsäuren oder Hydroxyfettsäuren mit Monoalkoholen und/oder Glykolen. Als Fettsäuren kommen beispielsweise gesättigte unverzweigte Fettsäuren mit 1 bis 30, insbesondere 3 bis 20 C-Atomen, gesättigte verzweigte Fettsäuren, wie Isobutter- oder Isovaleriansäure, einfach ungesättigte unverzweigte Fettsäuren, wie Acryl-, Croton, Palmitolein-, oder Ölsäure, und zweifach ungesättigte unverzweigte Fettsäuren, wie Sorbin- oder Linolsäure, ggf. mit einer oder mehreren -OH Funktionen im Molekül, in Frage. Als Alkohole kommen beispielsweise Monoalkohole mit 1 - 20 C-Atomen, linear oder verzweigt, Glykole, wie Ethylenglykol, Diethylenglykol, Triethylenglykol, Polyethylenglykol, Propylenglykol, und 1,3-Butylenglykol in Frage. Das Molekulargewicht der eingesetzten Ester liegt vorzugsweise unter 400 da, insbesondere unter 300 da.

Die eingesetzten organischen Lösungsmittel sind vorzugsweise halogenfreie organische Lösungsmittel. Im Einzelnen in Frage kommen insbesondere aliphatische, cycloaliphatische, aromatische Kohlenwasserstoffe, wie Mesitylen, 1,2,4- Trimethylbenzol, Cumol und Solvent Naptha, Toluol, Xylol; (organische) Ester, wie Methylacetat, Ethylacetat, Butylacetat, Methoxypropylacetat, Ethyl-3-ethoxypropionat. Bevorzugt sind Mesitylen, 1,2,4-Trimethylbenzol, Cumol und Solvent Naptha, Toluol, Xylol, Essigsäuremethylester, Essigsäureethylester, Methoxypropylacetat. Ethyl-3-ethoxypropionat, Butylglykolacetat. Ganz besonders bevorzugt sind: Mesitylen (1,3,5-Trimethylbenzol), 1,2,4-Trimethylbenzol, Cumol (2-Phenylpropan), Solvent Naptha und Ethyl-3-ethoxypropionat.

Ein geeignetes Lösungsmittelgemisch umfasst beispielsweise L1) 0 bis 10 Gew.-%, vorzugsweise 1 bis 5 Gew.-%, insbesondere 2 bis 3 Gew.-%, Mesitylen, L2) 10 bis 50 Gew.-%, vorzugsweise 25 bis 50 Gew.-%, insbesondere 30 bis 40 Gew.-%, 1-Methoxy-2-propanolacetat, L3) 0 bis 20 Gew.-%, vorzugsweise 1 bis 20 Gew.-%, insbesondere 7 bis 15 Gew.-%, 1,2,4-Trimethylbenzol, L4) 10 bis 50 Gew.-%, vorzugsweise 25 bis 50 Gew.-%, insbesondere 30 bis 40 Gew.-%, Ethyl-3-ethoxypropionat, L5) 0 bis 10 Gew.-%, vorzugsweise 0,01 bis 2 Gew.-%, insbesondere 0,05 bis 0,5 Gew.-%, Cumol, und L6) 0 bis 80 Gew.-%, vorzugsweise 1 bis 40 Gew.-%, insbesondere 15 bis 25 Gew.-%, Solvent Naphtha, wobei die Summe der Komponenten L1 bis L6 stets 100 Gew.-% ergibt. Anstelle von L2 und/oder L4 oder zusätzlich kann das Lösungsmittelgemisch auch L7) mit 10 bis 50 Gew.-%, vorzugsweise 25 bis 50 Gew.-%, insbesondere 30 bis 60 Gew.-%, Butylglykol-Acetat enthalten, wobei die Summe der verwendeten Komponenten L1 bis L7 stets 100 Gew.-% ergibt.

Das Polycarbonatderivat weist typischerweise ein mittleres Molekulargewicht (Gewichtsmittel) von mindestens 10.000, vorzugsweise von 20.000 bis 300.000.

Die Zubereitung kann im Detail enthalten: A) 10 bis 40 Gew.-%, insbesondere 15 bis 30 Gew.-%, eines Bindemittels mit einem Polycarbonatderivat auf Basis eines geminal disubstituierten Dihydroxydiphenylcycloalkans, B) 60 bis 90 Gew.-%, insbesondere 70 bis 85 Gew.-%, eines organischen Lösungsmittels oder Lösungsmittelgemischs, C) 0 oder 0,1 bis 6 Gew.-%, insbesondere 0,5 bis 4 Gew.-%, eines Farbmittels oder Farbmittelgemischs, D) 0 oder 0,001 bis 6 Gew.-%, insbesondere 0,1 bis 4 Gew.-%, eines funktionalen Materials oder einer Mischung funktionaler Materialien, E) 0 oder 0,1 bis 30 Gew.-%, insbesondere 1 bis 20 Gew.-%, Additive und/oder Hilfsstoffe, oder einer Mischung solcher Stoffe, und F) 1 bis 20 Gew.-%, insbesondere 5 bis 15 Gew.-% eines UV-Blockers.

Als Komponente C, sofern ein Farbmittel überhaupt vorgesehen sein soll, kommt grundsätzlich jedes beliebige Farbmittel oder Farbmittelgemisch in Frage. Unter Farbmittel sind alle farbgebenden Stoffe bezeichnet. Das bedeutet, es kann sich sowohl um Farbstoffe (einen Überblick über Farbstoffe gibt Ullmann's Encyclopedia of Industrial Chemistry, Electronic Release 2007, Wiley Verlag, Kapitel "Dyes, General Survey", wie auch Pigmente (einen Überblick über organische wie anorganische Pigmente gibt Ullmann's Encyclopedia of Industrial Chemistry, Electronic Release 2007, Wiley Verlag, Kapitel "Pigments, Organic" bzw. "Pigments, Inorganic") handeln. Farbstoffe sollten in den Lösungsmitteln der Komponente B löslich bzw. (stabil) dispergierbar oder suspendierbar sein. Die Farbmittel können entweder direkt als Farbstoff bzw. Pigment zugesetzt werden oder als Paste, einem Gemisch aus Farbstoff und Pigment zusammen mit einem weiteren Binder. Dieser zusätzliche Binder kann sich vom erfindungsgemäß eingesetzten Binder unterscheiden (z.B. ein Polyester sein), sollte aber chemisch kompatibel mit den weiteren Komponenten der erfindungsgemäßen Zubereitung sein. Sofern eine solche Paste als Farbmittel eingesetzt wird, bezieht sich die Mengenangabe der Komponente B auf das Farbmittel ohne die sonstigen Komponenten der Paste. Diese sonstigen Komponenten der Paste sind dann unter die Komponente E zu subsumieren.

Die Komponente D umfasst Substanzen, die unter Einsatz von technischen Hilfsmitteln unmittelbar durch das menschliche Auge oder durch Verwendung von geeigneten Detektoren ersichtlich sind. Hier sind die dem Fachmann einschlägig bekannten Materialien (vgl. auch van Renesse, Optical document security, 3rd Ed., Artech House, 2005) gemeint, die zu Absicherung von Wert und Sicherheitsdokumenten eingesetzt werden. Dazu zählen Lumineszenzstoffe (Farbstoffe oder Pigmente, organisch oder anorganisch) wie z.B. Photoluminophore, Elektroluminophore, Antistokes Luminophore, Fluorophore aber auch magnetisierbare, photoakustisch adressierbare oder piezoelektrische Materialien. Des Weiteren können Raman-aktive oder Ramanverstärkende Materialien eingesetzt werden, ebenso wie sogenannte Barcode-Materialien. Auch hier gelten als bevorzugte Kriterien insbesondere die Löslichkeit in der Komponente B. Funktionale Materialien können direkt zugegeben werden oder über eine Paste, i.e. Gemisch mit einem weiteren Binder, welcher dann Bestandteil der Komponente E bildet, oder dem erfindungsgemäß eingesetzten Binder der Komponente A.

Die Komponente E umfasst bei Farben, Tinten bzw. Beschichtungsmitteln üblicherweise eingerichtete Stoffe wie Antischaummittel, Stellmittel, Netzmittel, Tenside, Fließmittel, Trockner, Katalysatoren, (Licht-) Stabilisatoren, Konservierungsmittel, Biozide, Tenside, organische Polymere zur Viskositätseinstellung, Puffersysteme, etc. Als Stellmittel kommen fachübliche Stellsalze in Frage. Ein Beispiel hierfür ist Natriumlactat. Als Biozide kommen alle handelsüblichen Konservierungsmittel, welche für Tinten verwendet werden, in Frage. Beispiele hierfür sind Proxel^{®}GXL und Parmetol^{®} A26. Als Tenside kommen alle handelsüblichen Tenside, welche für Tinten verwendet werden, in Frage. Bevorzugt sind amphotere oder nichtionische Tenside. Selbstverständlich ist aber auch der Einsatz spezieller anionischer oder kationischer Tenside, welche die Eigenschaften des Farbstoffs nicht verändern, möglich. Beispiele für geeignete Tenside sind Betaine, ethoxilierte Diole usw. Beispiele sind die Produktreihen Surfynol^{®} und Tergitol^{®}. Es kann ein Puffersystem eingerichtet sein, welches den pH-Wert im Bereich von 2,5 bis 8,5, insbesondere im Bereich von 5 bis 8, stabilisiert. Geeignete Puffersysteme sind Lithiumacetat, Boratpuffer, Triethanolamin oder Essigsäure/Natriumacetat. Ein Puffersystem wird insbesondere im Falle einer im Wesentlichen wässrigen Komponente B in Frage kommen. Zur Einstellung der Viskosität können (ggf. wasserlösliche) Polymere vorgesehen sein. Hier kommen alle für übliche Tintenformulierungen geeignete Polymere in Frage. Beispiele sind wasserlösliche Stärke, insbesondere mit einem mittleren Molekulargewicht von 3.000 bis 7.000, Polyvinylpyrolidon, insbesondere mit einem mittleren Molekulargewicht von 25.000 bis 250.000, Polyvinylalkohol, insbesondere mit einem mittleren Molekulargewicht von 10.000 bis 20.000, Xanthan-Gummi, Carboxy-Methylcellulose, Ethylenoxid/Propylenoxid-Blockcopolymer, insbesondere mit einem mittleren Molekulargewicht von 1.000 bis 8.000. Ein Beispiel für das letztgenannte Blockcopolymer ist die Produktreihe Pluronic^{®}. Der Anteil an Biozid, bezogen auf die Gesamtmenge, kann im Bereich von 0 bis 0,5 Gew-%, vorzugsweise 0,1 bis 0,3 Gew.-%, liegen. Der Anteil an Tensid, bezogen auf die Gesamtmenge, kann im Bereich von 0 bis 0,2 Gew.-% liegen. Der Anteil an Stellmitteln kann, bezogen auf die Gesamtmenge, 0 bis 1 Gew.-%, vorzugsweise 0,1 bis 0,5 Gew.-%, betragen.

Zu den Hilfsmitteln werden auch sonstige Komponenten gezählt, wie beispielsweise Essigsäure, Ameisensäure oder n-Methyl-Pyrolidon oder sonstige Polymere aus der eingesetzten Farbstofflösung oder -Paste.

Bezüglich Substanzen, welche als Komponente E geeignet sind, wird ergänzend beispielsweise auf Ullmann's Encyclopedia of Chemical Industry, Electronic Release 2007, Wiley Verlag, Kapitel "Paints and Coatings", Sektion "Paint Additives", verwiesen.

Grundsätzlich sind für den Auftrag alle fachüblichen Drucktechniken, aber auch sonstige Auftragtechniken, wie beispielsweise Streichen, Rakeln, Spritzen usw. einsetzbar.

Der Begriff der Deckschicht bezeichnet im Rahmen der Erfindung eine Schicht, welche über einem Sicherheitselement mit einem Elektroluminophor angeordnet ist und dieses abdeckt. Es kann sich dabei um eine im fertigen Produkt zuoberst angeordnete Schicht handeln, es ist aber auch möglich, weitere Schichten auf der Deckschicht vorzusehen.

Weiterhin betrifft die Erfindung ein Sicherheits- und/oder Wertdokument mit einem Substrat, wobei das Substrat zumindest einen Bereich mit einer elektrolumineszierenden Substanz enthält, und wobei zumindest der Bereich mit der elektrolumineszierenden Substanz mit einer Deckschicht abgedeckt ist, welche mittels einer erfindungsgemäßen verwendeten Zubereitung herstellbar ist. Dabei liegt die Dicke der (getrockneten) Deckschicht im Bereich 0,01 bis 10 µm, insbesondere 0,05 bis 5 µm.

Schließlich betrifft die Erfindung ein Verfahren zur Herstellung eines solchen Sicherheits- und/oder Wertdokumentes, wobei die Deckschicht durch Auftragung der Zubereitung, beispielsweise mittels eines Druckverfahrens, insbesondere eines Siebdruckverfahrens, hergestellt wird. Der Auftrag der Zubereitung kann mehrfach, beispielsweise 2 - 5-fach, erfolgen, wobei zwischen jedem Auftrag die Zubereitung getrocknet werden kann. Aber auch der Auftrag nass in nass ist möglich.

Als Sicherheits- und/oder Wertdokument seien beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise zumindest ein Substrat und eine meist in Teilbereichen oder vollständig transparente Deckschicht auf. Substrat und Deckschicht können ihrerseits aus einer Mehrzahl von Schichten bestehen.

Ein Substrat ist eine Trägerstruktur, auf oder in welcher meist eine Druckschicht mit Informationen, Bildern, Mustern und dergleichen aufgebracht wird. Das Substrat enthält auch Sicherheitselemente, u.a. im Rahmen der Erfindung zumindest ein Sicherheitselement mit einem Elektroluminophore. Beispiele für geeignete Elektroluminophore sind zinksulfidische Elektroluminophore, wie in der Literaturstelle WO 2001/034723 sowie den darin zitierten Literaturstellen beschrieben. Ergänzend wird für weitere Elektroluminophore auf die Literaturstelle van Renesse, Optical document security, 3rd Ed., Artech House, 2005, verwiesen. Diese Elektroluminophore können dabei in dem Substrat oder unmittelbar auf dessen Oberfläche, beispielsweise im Rahmen einer Druckschicht, angeordnet sein.

Als Materialien für ein Substrat kommen alle fachüblichen Werkstoffe auf Papier- und/oder (organischer) Polymerbasis in Frage. Erfindungsgemäße Zubereitungen sind unabhängig von der vorliegenden Erfindung insbesondere auch zur Beschichtung von papierbasierten Substraten geeignet, und zwar unabhängig von dem Vorhandensein oder Nichtvorhandensein von Elektroluminophore im Substrat und/oder von UV-Blockern in der Zubereitung.

Im Folgenden wird die Erfindung anhand von Beispielen näher erläutert.
Beispiel 1: Herstellung von erfindungsgemäß einsetzbaren Polycarbonatderivaten
Beispiel 1.1: Herstellung eines ersten Polycarbonatderivats

205,7 g (0,90 Mol) Bisphenol A (2,2-Bis-(4-hydroxyphenyl)-propan, 30, 7 g (0, 10 Mol) 1,1-Bis-(4-hydroxyphenyl)-3,3,5-trimethylcyclohexan, 336,6 g (6 Mol) KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung wurden bei pH 13 bis 14 und 21 bis 25°C 198 g (2 Mol) Phosgen eingeleitet. Danach wird 1 ml Ethylpiperidin zugegeben und noch 45 Min. gerührt. Die bisphenolatfreie wässrige Phase wird abgetrennt, die organische Phase nach Ansäuern mit Phosphorsäure mit Wasser neutral gewaschen und vom Lösungsmittel befreit.

Das Polycarbonatderivat zeigte eine relative Lösungsviskosität von 1,255. Die Glastemperatur wurde zu 157°C bestimmt (DSC).

### Beispiel 1.2: Herstellung eines zweiten Polycarbonatderivats

Analog dem Beispiel 1 wurde eine Mischung aus 181,4 g (0,79 Mol) Bisphenol A und 63,7 g (0,21 Mol) 1,1-Bis-(4-hydroxyphenyl)-3,3,5-trimethylcyclohexan zum Polycarbonatderivat umgesetzt.

Das Polycarbonatderivat zeigte eine relative Lösungsviskosität von 1,263. Die Glastemperatur wurde zu 167°C bestimmt (DSC).

### Beispiel 1.3: Herstellung eines dritten Polycarbonatderivats

Analog dem Beispiel 1 wurde eine Mischung von 149,0 g (0,65 Mol) Bisphenol A (2,2-Bis-(4-hydroxyphenyl)-propan und 107,9 g (0,35 Mol) 1,1-Bis-(4-hydroxyphenyl)-3,3,5-trimethylcyclohexan zum Polycarbonatderivat umgesetzt.

Das Polycarbonatderivat zeigte eine relative Lösungsviskosität von 1,263. Die Glastemperatur wurde zu 183 °C bestimmt (DSC).

### Beispiel 1.4: Herstellung eines vierten Polycarbonatderivats

Analog dem Beispiel 1 wurde eine Mischung aus 91,6 g (0,40 Mol) Bisphenol A und 185,9 g (0,60 Mol) 1,1-Bis-(4-hydroxyphenyl)-3,3,5-trimethylcyclohexan zum Polycarbonatderivat umgesetzt.

Das Polycarbonatderivat zeigte eine relative Lösungsviskosität von 1,251. Die Glastemperatur wurde zu 204 °C bestimmt (DSC).

### Beispiel 1.5: Herstellung eines fünften Polycarbonatderivats

Wie in Beispiel 1 wurde eine Mischung aus 44,2 g (0,19 Mol) Bisphenol A und 250,4 g (0,81 Mol) 1,1-Bis-(4-hydroxyphenyl)-3,3,5-trimethylcyclohexan zum Polycarbonat umgesetzt.

Das Polycarbonatderivat zeigte eine relative Lösungsviskosität von 1,248. Die Glastemperatur wurde zu 216 °C bestimmt (DSC).

### Beispiel 2: Herstellung einer flüssigen Zubereitung zur Herstellung einer Deckschicht

Eine flüssige Zubereitung wurde aus 25 Gew.-Teile des Polycarbonatderivats aus Beispiel 1.3 und 75 Gew.-Teile eines Lsgm.-Gemisches gemäß Tabelle I hergestellt.

**Tabelle I**

| | |
|---|---|
| Mesitylen | 2, 4 |
| 1-Methoxy-2-propanolacetat | 34, 95 |
| 1,2,4-Trimethylbenzol | 10, 75 |
| Ethyl-3-ethoxypropionat | 33, 35 |
| Cumol | 0, 105 |
| Solvent Naphtha | 18, 45 |

Es wurde eine farblose Lösung erhalten.

Zu 9 g der Lösung wurde 1 g Butylmethoxydibenzoylmethan gegeben und über Nacht bei Raumtemperatur und unter Rühren gelöst.

### Beispiel 3: Herstellung eines erfindungsgemäßen Sicherheits- und/oder Wertdokumentes

Zunächst wird in üblicher Weise ein Substrat, typischerweise aus mehreren Schichten, hergestellt, welches ein Sicherheitselement mit einem zinksulfidischen Elektroluminophoren enthält. Auf den Bereich mit dem Sicherheitselement wird eine Schicht aus einer Zubereitung aus Beispiel 2 aufgebracht, beispielsweise mittels zweifachen Siebdrucks (79er Sieb). Danach wurde die aufgebrachte Schicht getrocknet, wobei sich die fertige Deckschicht bildete.

Das erhaltene Sicherheits- und/oder Wertdokument wurde dann einer UV-Lichtquelle ausgesetzt, wobei das Sicherheitselement nicht sichtbar war. Dagegen war die Elektrolumineszenz des Sicherheitselementes vollständig erhalten. Die Deckschicht, im Ausführungsbeispiel zuoberst angeordnet, wies keinen Gelbstich auf und war zudem extrem abriebfest.

## Patentansprüche

1. Verwendung einer Zubereitung enthaltend
A) 0,1 bis 40 Gew.-% eines Bindemittels mit einem Polycarbonatderivat auf Basis eines geminal disubstituierten Dihydroxydiphenylcycloalkans,
B) 60 bis 99,9 Gew.-% eines Lösungsmittels oder Lösungsmittelgemischs,
C) 0 bis 10 Gew.-%, bezogen auf Trockenmasse, eines Farbmittels oder Farbmittelgemischs,
D) 0 bis 10 Gew.-% eines funktionalen Materials oder einer Mischung funktionaler Materialien,
E) 0 bis 30 Gew.-% Additive und/oder Hilfsstoffe, oder einer Mischung solcher Stoffe, und
F) 0,1 bis 20 Gew.-% eines UV-Blockers
wobei die Summe der Komponenten A) bis F) stets 100 Gew.-% ergibt,
zur Herstellung einer Deckschicht auf einem Substrat enthaltend eine elektrolumineszierende Substanz, wobei die Zubereitung auf das Substrat aufgetragen und getrocknet wird

2. Verwendung nach Anspruch 1, wobei das Polycarbonatderivat ein mittleres Molekulargewicht (Gewichtsmittel) von mindestens 10.000, vorzugsweise von 20.000 bis 300.000, aufweist.

3. Verwendung nach einem der Ansprüche 1 oder 2, wobei das Polycarbonatderivat funktionelle Carbonatstruktureinheiten der Formel (I) enthält, 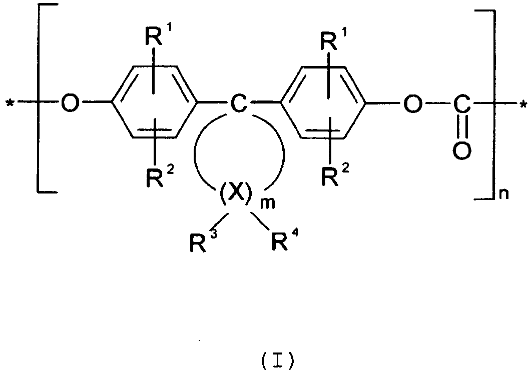 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl
X Kohlenstoff und
n eine ganze Zahl größer 20 bedeuten,
mit der Maßgabe, dass an mindestens einem Atom X, R³ und R⁴ gleichzeitig Alkyl bedeuten.

4. Verwendung nach Anspruch 3, wobei an 1 bis 2 Atomen X, insbesondere nur an einem Atom X, R³ und R⁴ gleichzeitig Alkyl, vorzugsweise Methyl, sind.

5. Verwendung nach einem der Ansprüche 3 bis 4, wobei die X-Atome in alpha-Stellung zu dem Diphenyl-substituierten C-Atom (C1) nicht dialkylsubstituiert sind, oder wobei die X-Atome in beta-Stellung zu C1 mit Alkyl disubstituiert sind.

6. Verwendung nach einem der Ansprüche 3 bis 5, wobei das Polycarbonatderivat auf Basis 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol ist.

7. Verwendung nach einem der Ansprüche 1 bis 6, wobei das Polycarbonatderivat ein Copolymer enthaltend, insbesondere bestehend aus, Monomereinheiten M1 auf Basis der Formel (Ib), beispielsweise auf Basis Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, ist, wobei das Molverhältnis M2/M1 vorzugsweise größer als 0,3, insbesondere größer als 0,40, vorzugsweise größer als 0,50 ist.

8. Verwendung nach einem der Ansprüche 1 bis 7, wobei die Komponente B) aus einem flüssigen aliphatischen, cycloaliphatischen, und/oder aromatischen Kohlenwasserstoff, einem flüssigem organischen Ester, und/oder einer Mischung solcher Substanzen besteht, wobei der Kohlenwasserstoff und/oder der organische Ester vorzugsweise ausgewählt ist aus der Gruppe bestehend aus "Mesitylen, 1,2,4- Trimethylbenzol, Cumol, Solvent Naptha, Toluol, Xylol, Methylacetat, Ethylacetat, Butylacetat, Methoxypropylacetat, Ethyl-3-ethoxypropionat, Butylglykolacetat".

9. Verwendung nach einem der Ansprüche 1 bis 8, wobei die Zubereitung enthält:
A) 10 bis 40 Gew.-%, insbesondere 15 bis 30 Gew.-%, eines Bindemittels mit einem Polycarbonatderivat auf Basis eines geminal disubstituierten Dihydroxydiphenylcycloalkans,
B) 60 bis 90 Gew.-%, insbesondere 70 bis 85 Gew.-%, eines organischen Lösungsmittels oder Lösungsmittelgemischs,
C) 0 oder 0,1 bis 6 Gew.-%, insbesondere 0,5 bis 4 Gew.-%, eines Farbmittels oder Farbmittelgemischs,
D) 0 oder 0,001 bis 6 Gew.-%, insbesondere 0,1 bis 4 Gew.-%, eines funktionales Materials oder einer Mischung funktionaler Materialien,
E) 0 oder 0,1 bis 30 Gew.-%, insbesondere 1 bis 20 Gew.-%, Additive und/oder Hilfsstoffe, oder einer Mischung solcher Stoffe, und
F) 1 bis 20 Gew.-%, insbesondere 5 bis 15 Gew.-% eines UV-Blockers.

10. Verwendung nach einem der Ansprüche 1 bis 9, wobei der UV-Blocker ausgewählt ist aus der Gruppe bestehend aus Butylmethoxydibenzoylmethane, Octyl Methoxycinnamate, Octyl Salicylate, Homosalate, Menthyl Antranilate, Octocrylene, Benzophenone-3, Octyl Dimethyl PABA, 4-Methylbenzilidene, und Mischungen von zwei oder mehreren solcher Substanzen.

11. Sicherheits- und/oder Wertdokument mit einem Substrat, wobei das Substrat zumindest einen Bereich mit einer elektrolumineszierenden Substanz enthält, und wobei zumindest der Bereich mit der elektrolumineszierenden Substanz mit einer Deckschicht abgedeckt ist, welche mittels einer Zubereitung nach einem der Ansprüche 1 bis 10 herstellbar ist.

12. Sicherheits- und/oder Wertdokument nach Anspruch 11, wobei die Dicke der Deckschicht im Bereich 0,01 bis 10 µm, insbesondere 0,05 bis 5 µm, liegt.

13. Verfahren zur Herstellung eines Sicherheits- und/oder Wertdokumentes nach Anspruch 11 oder 12, wobei die Deckschicht durch Aufbringung der Zubereitung mittels eines Beschichtungsverfahrens, vorzugsweise eines Druckverfahrens, insbesondere eines Siebdruckverfahrens, hergestellt wird.

## Claims

1. Use of a preparation containing:
A) 0.1 to 40 percent by weight of a binder comprising a polycarbonate derivative based on a geminally disubstituted dihydroxy diphenyl cycloalkane,
B) 60 to 99.9 percent by weight of a solvent or solvent mixture,
C) 0 to 10 percent by weight of a dye or dye mixture, the percentage being in relation to the dry weight,
D) 0 to 10 percent by weight of a functional material or of a mixture of functional materials,
E) 0 to 30 percent by weight of additives and/or auxiliary agents, or of a mixture of such substances,
F) 0.1 to 20 percent by weight of a UV blocker,
the total of components A) to F) always amounting to 100 percent by weight,
for making a cover layer on a substrate including an electroluminescent substance, the preparation being applied onto the substrate and dried.

2. The use according to claim 1, wherein the polycarbonate derivative has a mean molecular weight (weight average) of at least 10,000, preferably from 20,000 to 300,000.

3. The use according to one of claims 1 or 2, wherein the polycarbonate derivative contains functional carbonate structural units of Formula (I), 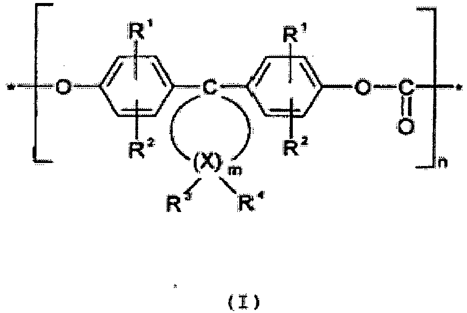
wherein R¹ and R² independently from one another represent hydrogen, halogen, preferred chlorine or bromine, C₁-C₈ alkyl, C₅-C₆ cycloalkyl, C₆-C₁₀ aryl, preferred phenyl, and C₇-C₁₂ aralkyl, preferred phenyl C₁-C₄ alkyl, in particular benzyl,
m is an integer from 4 to 7, preferred 4 or 5, R³ and R⁴ are individually selectable for each X, independently from one another hydrogen or C₁-C₆ alkyl,
X is carbon, and
n is an integer greater than 20,
with the proviso that R³ and R⁴ on at least one X atom are simultaneously alkyl.

4. The use according to claim 3, wherein R³ and R⁴ on 1 to 2 X atoms, in particular only on one X atom, are simultaneously alkyl, preferably methyl.

5. The use according to one of claims 3 to 4, wherein the X atoms in the alpha position to the diphenyl-substituted C atom (C1) are not substituted with dialkyl, or wherein the X atoms in the beta position to C1 are disubstituted with alkyl.

6. The use according to one of claims 3 to 5, wherein the polycarbonate derivative is based on 4,4'-(3,3,5-trimethylcyclohexan-1,1-diyl)diphenol, 4,4'-(3,3-dimethylcyclohexan-1,1-diyl)diphenol, or 4,4'-(2,4,4-trimethylcyclopentan-1,1-diyl)diphenol.

7. The use according to one of claims 1 to 6, wherein the polycarbonate derivative contains a copolymer, in particular consists of monomeric units M1 based on Formula (Ib), for instance based on bisphenol A, as well as monomeric units M2 based on the geminally disubstituted dihydroxy diphenyl cycloalkane, preferably of the 4,4'-(3,3,5-trimethyl cyclohexane-1,1-diyl)diphenol, wherein the molar ratio M2/M1 preferably is greater than 0.3, in particular greater than 0.40, preferably greater than 0.50.

8. The use according to one of claims 1 to 7, wherein the component B) consists of a liquid aliphatic, cycloaliphatic, and/or aromatic hydrocarbon, a liquid organic ester, and/or of a mixture of such substances, wherein the hydrocarbon and/or the organic ester is preferably selected from the group consisting of "mesitylene, 1,2,4-trimethylbenzene, cumene, solvent naptha, toluene, xylol, methyl acetate, ethyl acetate, butyl acetate, methoxy propyl acetate, ethyl-3-ethoxy propionate, butyl glycol acetate".

9. The use according to one of claims 1 to 8, the preparation containing:
A) 10 to 40 percent by weight, in particular 15 to 30 percent by weight, of a binder comprising a polycarbonate derivative based on a geminally disubstituted dihydroxy diphenyl cycloalkane,
B) 60 to 90 percent by weight, in particular 75 to 85 percent by weight, of an organic solvent or solvent mixture,
C) 0 or 0.1 to 6 percent by weight, in particular 0.5 to 4 percent by weight, of a dye or dye mixture,
D) 0 or 0.001 to 6 percent by weight, in particular 0.1 to 4 percent by weight, of a functional material or of a mixture of functional materials,
E) 0 or 0.1 to 30 percent by weight, in particular 1 to 20 percent by weight, of additives and/or auxiliary agents, or of a mixture of such substances,
F) 1 to 20 percent by weight, in particular 5 to 15 percent by weight, of a UV blocker.

10. The use according to one of claims 1 to 9, wherein the UV blocker is selected from the group consisting of butyl methoxy dibenzoyl methane, octyl methoxy cinnamate, octyl salicylate, homosalate, methyl anthranilate, octocrylene, benzophenone-3, octyl dimethyl PABA, 4-methyl benzylidene, and mixtures of two or more such substances.

11. A security and/or value document comprising a substrate, wherein the substrate includes at least one region with an electroluminescent substance, and wherein at least the region with the electroluminescent substance is covered by a cover layer that can be produced by means of a preparation according to one of claims 1 to 10.

12. The security and/or value document according to claim 11, wherein the thickness of the cover layer is in the range from 0.01 to 10 µm, in particular 0.05 to 5 µm.

13. A method for producing a security and/or value document according to claim 11 or 12, wherein the cover layer is produced by applying the preparation by means of a coating method, preferably a printing method, in particular a screen printing method.

## Revendications

1. Utilisation d'une préparation, contenant:
A) 0,1 à 40 % en poids d'un agent de liage comprenant un dérivé de polycarbonate sur la base d'un dihydroxy-diphényle-cycloalcane disubstitué de manière géminée,
B) 60 à 99,9 % en poids d'un solvant ou d'un mélange de solvants,
C) 0 à 10 % en poids d'un colorant ou d'un mélange de colorants, le pourcentage étant en relation au poids sec,
D) 0 à 10 % en poids d'un matériau fonctionnel ou d'un mélange de matériaux fonctionnels,
E) 0 à 30 % en poids d'additifs et/ou d'agents auxiliaires, ou d'un mélange de telles substances,
F) 0,1 à 20 % en poids d'un agent bloqueur d'UV,
la somme des composants A) à F) étant toujours égale à 100 % en poids,
pour produire une couche de recouvrement sur un substrat comportant une substance électroluminescente, la préparation étant appliquée sur le substrat et séchée.

2. Utilisation selon la revendication 1, dans laquelle le dérivé de polycarbonate a un poids moléculaire moyen en poids d'au moins 10.000, de préférence entre 20.000 et 300.000.

3. Utilisation selon la revendication 1 ou 2, dans laquelle le dérivé de polycarbonate contient des unités structurelles fonctionnelles de carbonate de la formule (I), 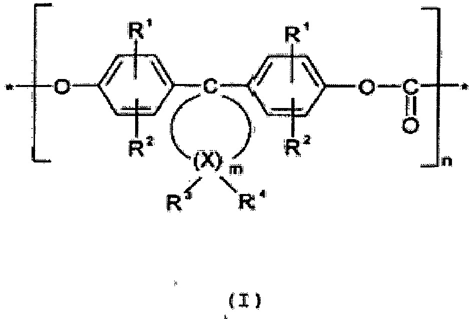
dans laquelle R¹ et R² représentent indépendamment l'un de l'autre hydrogène, halogène, de préférence chlore ou brome, alkyle en C₁ à C₈, cycloalkyle en C₅ à C₆, aryle en C₆ à C₁₀, de préférence phényle, et aralkyle en C₇ à C₁₂, de préférence phényle-alkyle en C₁ à C₄, en particulier benzyle,
m est un entier compris entre 4 et 7, de préférence 4 ou 5,
R³ et R⁴ sont individuellement choisissables pour chaque X, indépendamment l'un de l'autre hydrogène ou alkyle en C₁ à C₆,
X est du carbone, et
n est un entier supérieur à 20,
pourvu que R³ et R⁴ sur au moins un atome X sont simultanément alkyle.

4. Utilisation selon la revendication 3, dans laquelle R³ et R⁴ sur 1 à 2 atomes X, en particulier seulement sur un atome X, sont simultanément de l'alkyle, de préférence du méthyle.

5. Utilisation selon une des revendications 3 à 4, dans laquelle les atomes X dans la position alpha à l'atome C (C1) substitué en diphényle ne sont pas substitués en dialkyle, ou dans laquelle les atomes X dans la position bêta à C1 sont disubstitués en alkyle.

6. Utilisation selon une des revendications 3 à 5, dans laquelle le dérivé de polycarbonate est sur la base de
4,4'-(3,3,5-triméthylecyclohexane-1,1-diyl) diphénol,
4,4'-(3,3-diméthylecyclohexane-1,1-diyl) diphénol, ou
4,4'-(2,4,4-triméthylecyclopentane-1,1-diyl) diphénol.

7. Utilisation selon une des revendications 1 à 6, dans laquelle le dérivé de polycarbonate contient un copolymère, en particulier se compose d'unités monomères M1 sur la base de la formule (Ib), par exemple sur la base de bis-phénol A, aussi bien que d'unités monomères M2 sur la base du dihydroxy-diphényle-cycloalcane disubstitué de manière géminée, de préférence du 4,4'-(3,3,5-triméthylecyclohexane-1,1-diyl) diphénol, la proportion molaire M2/M1 de préférence étant supérieure à 0,3, en particulier supérieure à 0,40, de préférence supérieure à 0,50.

8. Utilisation selon une des revendications 1 à 7, dans laquelle le composant B) consiste en un hydrocarbure liquide aliphatique, cycloaliphatique et/ou aromatique, un ester organique liquide et/ou un mélange de telles substances, dans laquelle l'hydrocarbure et/ou l'ester organique est de préférence choisi à partir du groupe consistant en "mésitylène, 1,2,4-triméthylebenzène, cumène, solvant naptha, toluène, xylol, acétate de méthyle, acétate d'éthyle, acétate de butyle, acétate de méthoxy-propyle, propionate d'éthyle-3-éthoxy, acétate de butyle-glycol".

9. Utilisation selon une des revendications 1 à 8, la préparation contenant:
A) 10 à 40 % en poids, en particulier 15 à 30 % en poids, d'un agent de liage comprenant un dérivé de polycarbonate sur la base d'un dihydroxy-diphényle-cycloalcane disubstitué de manière géminée,
B) 60 à 90 % en poids, en particulier 75 à 85 % en poids, d'un solvant organique ou d'un mélange de solvants organiques,
C) 0 ou 0,1 à 6 % en poids, en particulier 0,5 à 4 % en poids, d'un colorant ou d'un mélange de colorants,
D) 0 ou 0,001 à 6 % en poids, en particulier 0,1 à 4 % en poids, d'un matériau fonctionnel ou d'un mélange de matériaux fonctionnels,
E) 0 ou 0,1 à 30 % en poids, en particulier 1 à 20 % en poids, d'additifs et/ou d'agents auxiliaires ou d'un mélange de telles substances,
F) 1 à 20 % en poids, en particulier 5 à 15 % en poids d'un agent bloqueur d'UV.

10. Utilisation selon une des revendications 1 à 9, dans laquelle l'agent bloqueur est choisi à partir du groupe consistant en butyle méthoxy dibenzoyle méthane, octyle méthoxy cinnamate, octyle salicylate, homosalate, méthyle anthranilate, octocrylène, benzophénone-3, octyle diméthyle PABA, 4-méthyle benzylidène, et des mélanges de deux ou plusieurs de telles substances.

11. Document de sécurité et/ou de valeur comprenant un substrat, dans lequel le substrat comporte au moins une région avec une substance électroluminescente, et dans lequel au moins la région avec la substance électroluminescente est recouverte d'une couche de recouvrement qui peut être produite au moyen d'une préparation selon une des revendications 1 à 10.

12. Document de sécurité et/ou de valeur selon la revendication 11, dans lequel l'épaisseur de la couche de recouvrement est comprise dans la gamme entre 0,01 et 10 µm, en particulier 0,05 et 5 µm.

13. Procédé de production d'un document de sécurité et/ou de valeur selon la revendication 11 ou 12, dans lequel la couche de recouvrement est produite par application de la préparation au moyen d'un procédé de couchage, de préférence un procédé d'impression, en particulier un procédé de sérigraphie.
